# EUROPEAN PATENT SPECIFICATION

(11) **EP 3 191 541 B1**
(45) Date of publication and mention of the grant of the patent: **12.03.2025**
(21) Application number: 15839675.4
(22) Date of filing: 10.09.2015
(51) Int. Cl.: C08G 73/02, C08L 79/02, B01J 23/04

(54) **CATIONICALLY CURABLE BENZOXAZINE COMPOSITIONS**
KATIONISCH HÄRTBARE BENZOXAZINZUSAMMENSETZUNGEN
COMPOSITIONS DE BENZOXAZINE DURCISSABLES PAR VOIE CATIONIQUE

(30) Priority: 12.09.2014 US 201462049454 P
(43) Date of publication of application: 19.07.2017
(73) Proprietor: Henkel AG & Co. KGaA, 40589 Düsseldorf (DE)
(72) Inventor: LEON, Jeffrey, Long Beach, California 90802 (US); CHAMPAGNE, Timothy M., Orange, California 92866 (US); CHEN, Yu, Eastvale, California 92880 (US); KILLORAN, John, Dublin 16 (IE)
(74) Representative: Hoffmann Eitle
(86) International application number: PCT/US2015/049278
(87) International publication number: WO 2016/040541

(56) References cited:
- EP-A1- 1 860 723
- EP-A1- 2 336 221
- WO-A1-2011/025652
- WO-A2-01/25225
- US-A- 5 254 664

## Description

### Field

A curable composition is provided, which includes a benzoxazine component; and a cationic catalyst comprised of a lithium cation and an anion comprising a hexahalogenated Group 15 element.

### Brief Decsription of Related Technology

Benzoxazine compositions are known.

Cationic catalysts are known.

Polymers prepared from benzoxazines with a cationic polymerization catalyst are known. Indeed, U.S. Patent No. 6,225,440 (Ishida) is directed to and claims a polymer comprising the reaction product of reacting at least one 2H-1,3,-dihydrobenzoxazine monomer with a cationic polymerization initiator, where the cationic polymerization initiator compris PCl₅, PCl₃, POCl₃, TiCl₅, (C₆H₅)₃C⁺(SbCl₆)-, SbCl₅, methyl triflat methyl tosylate, triflic acid, or aluminum phthalocyanine chloride or combinations thereof. In addition, WO 01/25225 A2 describes adducts of glycidylesters of α,α-branched carboxylic acids and carboxylic acids, to poly (ortho ester) as intermediate for their preparation and to a process for the preparation of solid poly (ortho ester) intermediates. The adducts are used as constituent for binders in two component curable coating compositions for clear coat or coloured top coat for automotives or general metal coatings or industrial coatings. EP 1 860 723 A1 describes a polymer electrolyte containing lithium hexafluorophosphate and a polymer.

Notwithstanding the above, it has been a long felt, yet unmet, desire to improve the polymerization conversion percent of cationically polymerizable benzoxazine compositions.

### SUMMARY

That desire has been satisfied here.

In one aspect the present invention relates to a curable composition as defined in appended claim 1 and comprising: (a) a benzoxazine component; and (b) a catalyst composition; wherein the catalyst composition comprises: (i) a lithium salt, an anion of which has a conjugate acid with a pKa of less than 5; and (ii) a carboxylic acid, a sulfonic acid, or a combination thereof; or wherein the catalyst composition comprises: (iii) a lithium salt, an anion of which has a conjugate acid with a pKa of less than 5; and (iv) a salt having as an anion a hexahalogenated Group 15 element.

In another aspect the present invention relates to a curable composition as defined in appended claim 2 and comprising: (a) a benzoxazine component; and (b) a catalyst composition comprising: (i) a cationic catalyst that is either comprised of a lithium cation and an anion comprising a hexahalogenated Group 15 element; or selected from lithium trifluoromethane sulfate, lithium palmitate, lithium tetrafluoroborate and lithium perchlorate; and (ii) a co-catalyst selected from tetrabutyl ammonium hexafluorophosphate and adipic acid.

### DETAILED DESCRIPTION

As noted above, a curable composition is provided as defined in the appended claims.

Specific examples of the cationic catalyst include lithium hexafluorophosphate and lithium hexafluoroantimonate.

And of course the cationic catalysts should be used in catalytic amounts, such as about 0.1 to about 10 percent by weight.

It is desirable to include a co-catalyst with the so-defined cationic catalysts and other cationic catalysts. Here, and as further illustrated in the examples, a cationic catalyst that itself does not confer a polymerization conversion greater than 90% (such as lithium trifluoromethane sulfate, lithium palmitate, lithium tetrafluoroborate and lithium perchlorate), together with one or more co-catalysts, such as tetrabutyl ammonium hexafluorophosphate and adipic acid, is suitable to achieve a polymerization conversion greater than 90% polymerization conversion. Polymerization conversion is determined by the following formula: percent conversion = ((I₀-I₁₂₀)/I₁₂₀) * 100, where I₀ is the integration (enthalpy) of the DSC cure peak of the uncured formulation and I120 is the integration of the DSC cure peak after a period of time of 120 minutes at a temperature of 170°C.

The benzoxazine component comprises one or more of 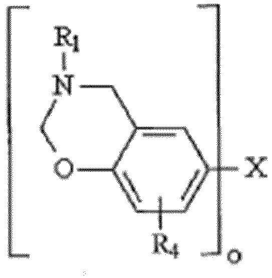 where o is 1-4, X is selected from a direct bond (when o is 2), alkyl (when o is 1), alkylene (when o is 2-4), carbonyl (when o is 2), thiol (when o is 1), thioether (when o is 2), sulfoxide (when o is 2), and sulfone (when o is 2), R₁ is selected from hydrogen, alkyl, and aryl, and R₄ is selected from hydrogen, halogen, alkyl, and alkenyl, or 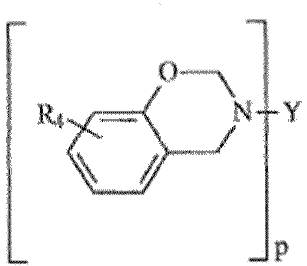 where p is 1-4, Y is selected from biphenyl (when p is 2), diphenyl methane (when p is 2) and derivatives thereof, diphenyl isopropane (when p is 2), diphenyl sulfide (when p is 2), diphenyl sulfoxide (when p is 2), diphenyl sulfone (when p is 2), and diphenyl ketone (when p is 2), and R₄ is selected from hydrogen, halogen, alkyl and alkenyl.

More specific examples of benzoxazines include one or more of the representative structures 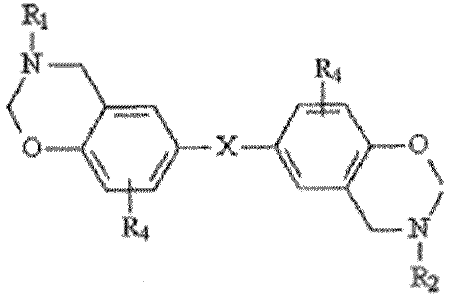 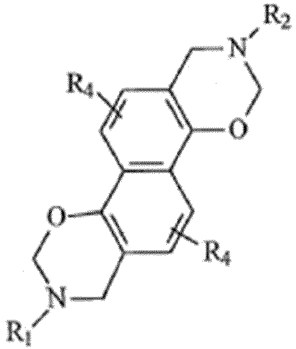 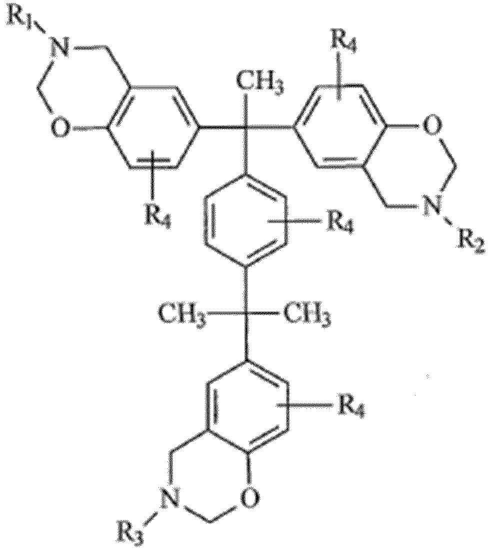 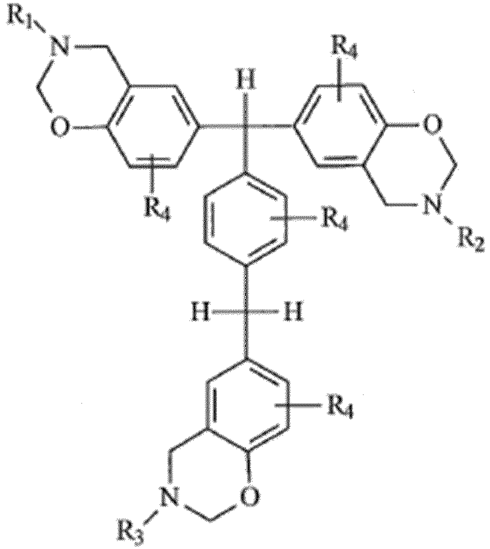 where X is selected from a direct bond, CH₂, C(CH₃)₂, C=O, S, S=O and O=S=O, and R₁, R₂, R₃ and R₄ are the same or different and are selected from hydrogen, alkyl, alkenyl and aryl.

Specific examples of the benzoxazine include one or more of

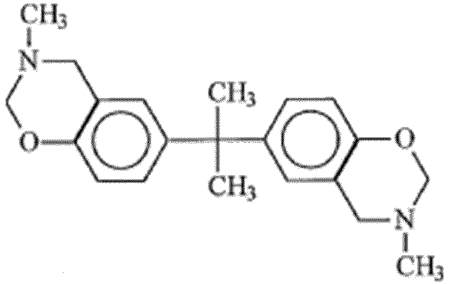

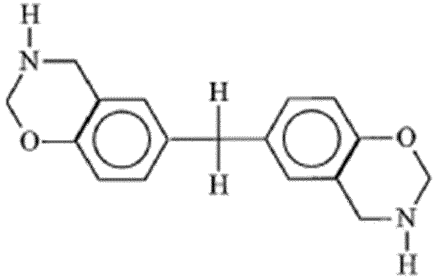

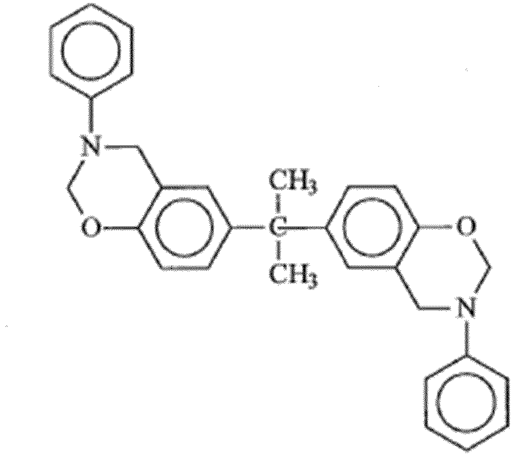

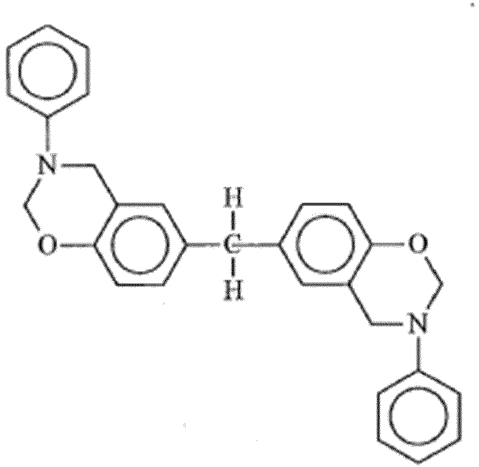

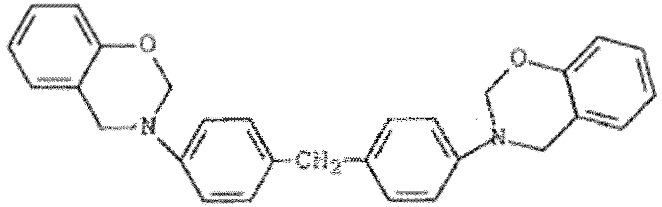

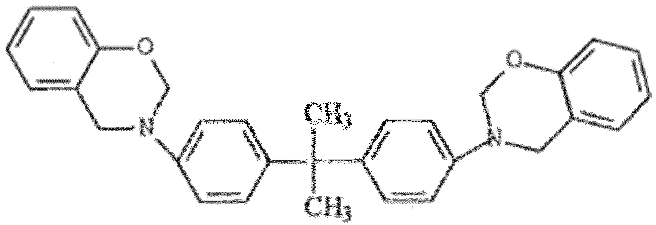

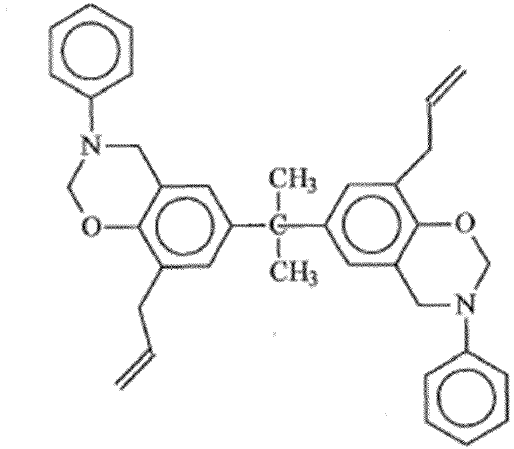

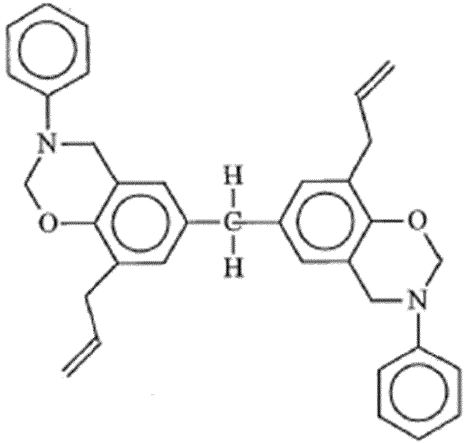

Monofunctional benzoxazines include those represented by following structure: 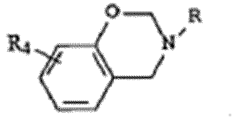 where R is alkyl, such as methyl, ethyl, propyls and butyls, or aryl with or without substitution on one, some or all of the available substitutable sites, and R₄ is selected from hydrogen, halogen, alkyl and alkenyl.

For instance, monofunctional benzoxazines may be embraced by the structure 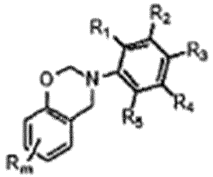 where in this case R is selected from alkyl, alkenyl, each of which being optionally substituted or interupted by one or more O, N, S, C=O, COO, and NHC=O, and aryl; m is 0-4; and R₁-R5 are independently selected from hydrogen, alkyl, alkenyl, each of which being optionally substituted or interupted by one or more 0, N, S, C=O, COOH, and NHC=O, and aryl.

Specific examples of such a monofunctional benzoxazine 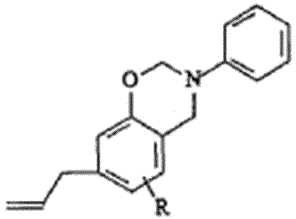 where R is as defined above; or

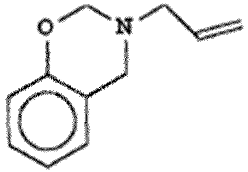

Benzoxazines are presently available commercially from several sources, including Huntsman Advanced Materials; Georgia-Pacific Resins, Inc.; and Shikoku Chemicals Corporation, Chiba, Japan, the last of which offers among others B-a, B-m, F-a, C-a, Pd and F-a benzoxazine resins.

If desired, however, instead of using commercially available sources, the benzoxazine may typically be prepared by reacting a phenolic compound, such as a bisphenol A, bisphenol F, bisphenol S or thiodiphenol, with an aldehyde and an alkyl or aryl amine. U.S. Patent No. 5,543,516 describes a method of forming benzoxazines, where the reaction time can vary from a few minutes to a few hours, depending on reactant concentration, reactivity and temperature. See also Burke et al., J. Org. Chem., 30(10), 3423 (1965); see generally U.S. Patent Nos. 4,607,091 (Schreiber), 5,021,484 (Schreiber), 5,200,452 (Schreiber) and 5,443,911 (Schreiber).

The benzoxazine should be present in the inventive composition in an amount in the range of about 10 to about 90 percent by weight, such as about 25 to about 75 percent by weight, desirably about 35 to about 65 percent by weight, based on the total weight of the composition.

The composition may also include one or more of epoxy, episulfide, oxetane, (meth)acrylate, maleimide, and cyanate ester as a coreactant.

The epoxy may be selected from glycidylated bisphenols (such as bisphenol A diglycidyl ether, bisphenol F diglycidyl ether, bisphenol S diglycidyl ether, bisphenol E diglycidyl ether), glycidylated biphenyls, and hydrogenated versions thereof; cycloaliphatic epoxy resins; glycidylated anilines and glycidylated hydroxyanilines.

The episulfides may be chosen from the sulfur analogues of any one or more of the epoxies noted in the previous paragraph.

The oxetanes may be chosen from the four membered oxygen-containing rings of any one or more of the epoxies noted.

The (meth)acrylate may be selected from a wide variety of materials, such as those represented by H₂C=CGCO₂R⁸, where G may be hydrogen, halogen or alkyl groups having from 1 to about 4 carbon atoms, and R⁸ may be selected from alkyl, cycloalkyl, alkenyl, cycloalkenyl, alkaryl, aralkyl, or aryl groups having from 1 to about 16 carbon atoms, any of which may be optionally substituted or interrupted as the case may be with silane, silicon, oxygen, halogen, carbonyl, hydroxyl, ester, carboxylic acid, urea, urethane, carbonate, amine, amide, sulfur, sulfonate, sulfone, and the like.

Additional (meth)acrylate monomers suitable for use herein include polyfunctional (meth)acrylate monomers, for example, di-or tri-functional (meth)acrylates such as polyethylene glycol di(meth)acrylates, tetrahydrofuran (meth)acrylates and di(meth)acrylates, hydroxypropyl (meth)acrylate ("HPMA"), hexanediol di(meth) acrylate, trimethylol propane tri(meth)acrylates ("TMPTMA"), diethylene glycol dimethacrylate, triethylene glycol dimethacrylates ("TRIEGMA"), tetraethylene glycol di(meth)acrylates, dipropylene glycol di(meth)acrylates, di-(pentamethylene glycol) di (meth)acrylates, tetraethylene diglycol di(meth)acrylates, diglycerol tetra(meth)acrylates, tetramethylene di(meth)acrylates, ethylene di(meth)acrylates, neopentyl glycol di(meth)acrylates, and bisphenol-A mono and di(meth)acrylates, such as ethoxylated bisphenol-A (meth)acrylate ("EBIPMA"), and bisphenol-F mono and di(meth)acrylates, such as ethoxylated bisphenol-A (meth)acrylate.

Still other (meth)acrylate monomers that may be used herein include silicone (meth)acrylate moieties ("SiMA"), such as those taught by and claimed in United States Patent No. 5,605,999 (Chu).

Other suitable monomers include polyacrylate esters represented by the formula 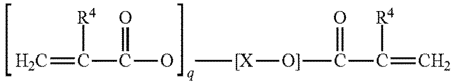 where R⁴ is a radical selected from hydrogen, halogen, and alkyl of from 1 to about 4 carbon atoms; q is an integer equal to at least 1, and preferably equal to from 1 to about 4; and X is an organic radical containing at least two carbon atoms and having a total bonding capacity of q plus 1. With regard to the upper limit for the number of carbon atoms in X, workable monomers exist at essentially any value. As a practical matter, however, a general upper limit is about 50 carbon atoms, preferably 30, and most preferably about 20.

For example, X can be an organic radical of the formula: 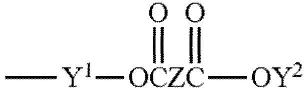 where each of Y¹ and Y² is an organic radical, preferably a hydrocarbon group, containing at least 2 carbon atoms, and preferably from 2 to about 10 carbon atoms, and Z is an organic radical, preferably a hydrocarbon group, containing at least 1 carbon atom, and preferably from 2 to about 10 carbon atoms. Other classes of useful monomers are the reaction products of di- or tri-alkylolamines (e.g., ethanolamines or propanolamines) with acrylic acids, such as are disclosed in French Patent N 1,581,361.

Non-limiting examples of useful acrylic ester oligomers include those having the following general formula 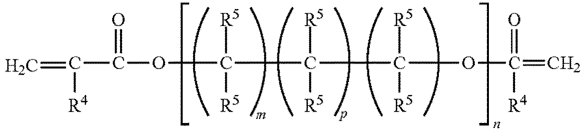 where R⁵ represents a radical selected from hydrogen, lower alkyl of from 1 to about 4 carbon atoms, hydroxyalkyl of from 1 to about 4 carbon atoms, and 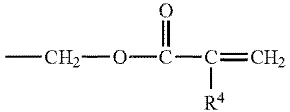 where R⁴ is a radical selected from hydrogen, halogen, and lower alkyl of from 1 to about 4 carbon atoms; R⁶ is a radical selected from hydrogen, hydroxyl, and 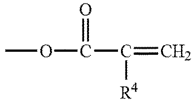 m is an integer equal to at least 1, e.g., from 1 to about 15 or higher, and preferably from 1 to about 8; n is an integer equal to at least 1, e.g., 1 to about 40 or more, and preferably between about 2 and about 10; and p is 0 or 1.

Typical examples of acrylic ester oligomers corresponding to the above general formula include di-, tri- and tetraethyleneglycol dimethacrylate; di (pentamethyleneglycol)dimethacrylate; tetraethyleneglycol diacrylate; tetraethyleneglycol di(chloroacrylate); diglycerol diacrylate; diglycerol tetramethacrylate; butyleneglycol dimethacrylate; neopentylglycol diacrylate; and trimethylolpropane triacrylate.

While di- and other polyacrylate esters, and particularly the polyacrylate esters described in the preceding paragraphs, can be desirable, monofunctional acrylate esters (esters containing one acrylate group) also may be used. When dealing with monofunctional acrylate esters, it is highly preferable to use an ester which has a relatively polar alcoholic moiety. Such materials are less volatile than low molecular weight alkyl esters and, more important, the polar group tends to provide intermolecular attraction during and after cure, thus producing more desirable cure properties, as well as a more durable sealant or adhesive. Most preferably, the polar group is selected from labile hydrogen, heterocyclic ring, hydroxy, amino, cyano, and halo polar groups. Typical examples of compounds within this category are cyclohexyl methacrylate, tetrahydrofurfuryl methacrylate, hydroxyethyl acrylate, hydroxypropyl methacrylate ("HPMA"), t-butylaminoethyl methacrylate, cyanoethylacrylate, and chloroethyl methacrylate.

The malemide has the general structure: 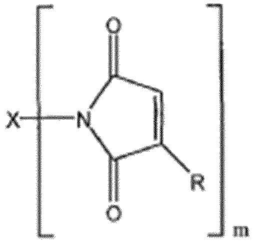
where m is 1, 2, or 3,
R is independently selected from hydrogen or lower alkyl, and
X is a branched chain alkyl or alkylene species having at least 12 carbon atoms.

The maleimide may be in liquid or solid form.

Alternatively, while mention is made of maleimides, itaconamides or nadimides may likewise be used. Thus, the maleimides, nadimides, and itaconimides include compounds having, respectively, the following structures: 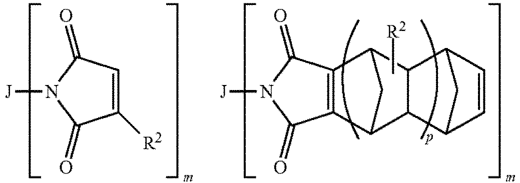 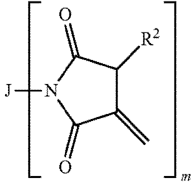 where m = 1-15, p = 0-15, each R² is independently selected from hydrogen or lower alkyl, and J is a monovalent or a polyvalent moiety comprising organic or organosiloxane radicals, and combinations of two or more thereof.

In one embodiment, J is a monovalent or polyvalent radical selected from the group consisting of hydrocarbyl, substituted hydrocarbyl, heteroatom-containing hydrocarbyl, substituted heteroatom-containing hydrocarbyl, hydrocarbylene, substituted hydrocarbylene, heteroatom-containing hydrocarbylene, substituted heteroatom-containing hydrocarbylene, polysiloxane, polysiloxane-polyurethane block copolymer, and combinations of two or more thereof, optionally containing one or more linkers selected from a covalent bond, -O-, -S-, -NR-, -O-C(O)-, -O-C(O)-O-, -O-C(O)-NR-, -NR-C(O)-, -NR-C(O)-O-, -NR-C(O)-NR-, -S-C(O)-, -S-C(O)-O-, -S-C(O)-NR-, -S(O)-, -S(O)₂-, -O-S(O)₂-, -O-S(O)2-O-, -O-S(O)₂-NR-, -O-S(O)-, -O-S(O)-O-, -O-S(O)-NR-, -O-NR-C(O)-, -O-NR-C(O)-O-, -O-NR-C(O)-NR-, -NR-O-C(O)-, -NR-O-C(O)-O-, -NR-O-C(O)-NR-, -O-NR-C (S)-, -0-NR-C (S)-O-, -O-NR-C(S)-NR-, -NR-O-C(S)-, -NR-O-C(S)-O-, -NR-O-C(S)-NR-, -O-C(S)-, -O-C(S)-O-, -O-C(S)-NR-, -NR-C(S)-, -NR- C(S)-O-, -NR-C(S)-NR-, -S-S(O)₂-, -S-S(O)₂-O-, -S-S(O)₂-NR-, -NR-O-S (O)-, -NR-O-S(O) -O-, -NR-O-S(O)-NR-, -NR-O-S(O)2-, -NR-O-S (O)2-O-, -NR-O-S(O)2-NR-, -O-NR-S(O)-, -O-NR-S(O)-O-, -O-NR-S(O)-NR-, -O-NR-S(O)2-O-, -O-NR-S(O)2-NR-, - O-NR-S(O)₂-, -O-P(O)R₂-, -S-P(O)R₂-, and -NR-P(O)R₂-, where each R is independently hydrogen, alkyl or substituted alkyl, and combinations of any two or more thereof.

When one or more of the above described monovalent or polyvalent groups contain one or more of the above described linkers to form the "J" appendage of a maleimide, nadimide or itaconimide group, as readily recognized by those of skill in the art, a wide variety of linkers can be produced, such as, for example, oxyalkyl, thioalkyl, aminoalkyl, carboxylalkyl, oxyalkenyl, thioalkenyl, aminoalkenyl, carboxyalkenyl, oxyalkynyl, thioalkynyl, aminoalkynyl, carboxyalkynyl, oxycycloalkyl, thiocycloalkyl, aminocycloalkyl, carboxycycloalkyl, oxycloalkenyl, thiocycloalkenyl, aminocycloalkenyl, carboxycycloalkenyl, heterocyclic, oxyheterocyclic, thioheterocyclic, aminoheterocyclic, carboxyheterocyclic, oxyaryl, thioaryl, aminoaryl, carboxyaryl, heteroaryl, oxyheteroaryl, thioheteroaryl, aminoheteroaryl, carboxyheteroaryl, oxyalkylaryl, thioalkylaryl, aminoalkylaryl, carboxyalkylaryl, oxyarylalkyl,thioarylalkyl, aminoarylalkyl, carboxyarylalkyl, oxyarylalkenyl, thioarylalkenyl, aminoarylalkenyl, carboxyarylalkenyl, oxyalkenylaryl, thioalkenylaryl, aminoalkenylaryl, carboxyalkenylaryl, oxyarylalkynyl, thioarylalkynyl, aminoarylalkynyl, carboxyarylalkynyl, oxyalkynylaryl, thioalkynylaryl, aminoalkynylaryl or carboxyalkynylaryl. oxyalkylene, thioalkylene, aminoalkylene, carboxyalkylene, oxyalkenylene, thioalkenylene, aminoalkenylene, carboxyalkenylene, oxyalkynylene, thioalkynylene, aminoalkynylene, carboxyalkynylene, oxycycloalkylene, thiocycloalkylene, aminocycloalkylene, carboxycycloalkylene, oxycycloalkenylene, thiocycloalkenylene, aminocycloalkenylene, carboxycycloalkenylene, oxyarylene, thioarylene, aminoarylene, carboxyarylene, oxyalkylarylene, thioalkylarylene, aminoalkylarylene, carboxyalkylarylene, oxyarylalkylene, thioarylalkylene, aminoarylalkylene, carboxyarylalkylene, oxyarylalkenylene, thioarylalkenylene, aminoarylalkenylene, carboxyarylalkenylene, oxyalkenylarylene, thioalkenylarylene, aminoalkenylarylene, carboxyalkenylarylene, oxyarylalkynylene, thioarylalkynylene, aminoarylalkynylene, carboxy arylalkynylene, oxyalkynylarylene, thioalkynylarylene, aminoalkynylarylene, carboxyalkynylarylene, heteroarylene, oxyheteroarylene, thioheteroarylene, aminoheteroarylene, carboxyheteroarylene, heteroatom-containing di- or polyvalent cyclic moiety, oxyheteroatom-containing di- or polyvalent cyclic moiety, thioheteroatom-containing di- or polyvalent cyclic moiety, aminoheteroatom-containing di- or polyvalent cyclic moiety, carboxyheteroatom-containing di- or polyvalent cyclic moiety, disulfide, sulfonamide, and the like.

Particularly desirable maleimides, nadimides, and itaconimides include, for example, maleimides, nadimides, and itaconimides having the following structures: 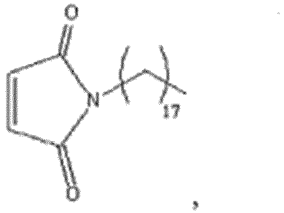 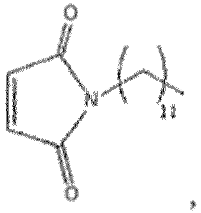 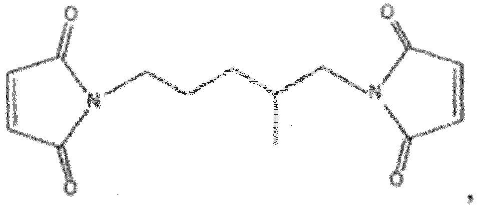 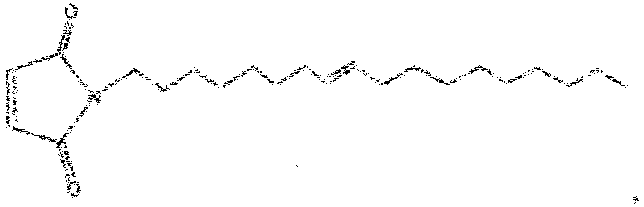 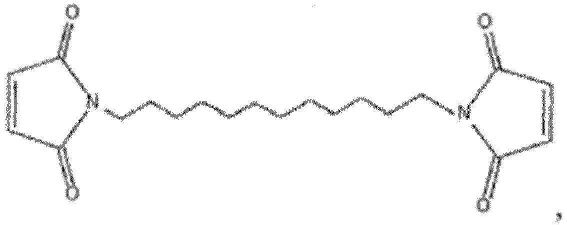 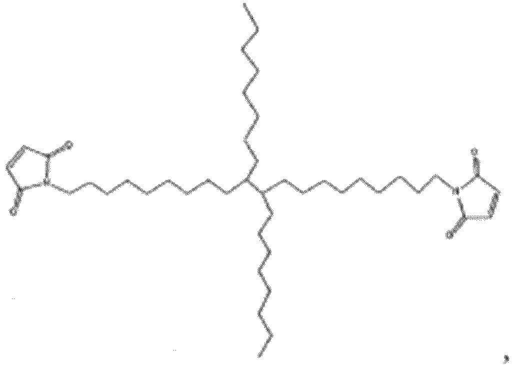 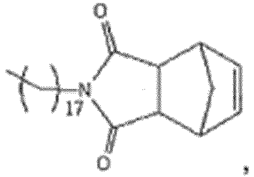 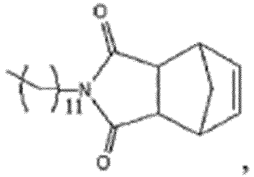 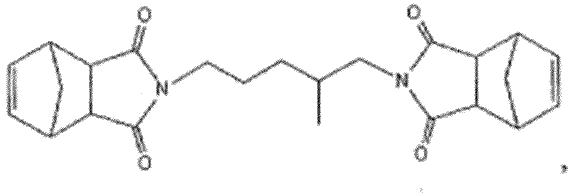 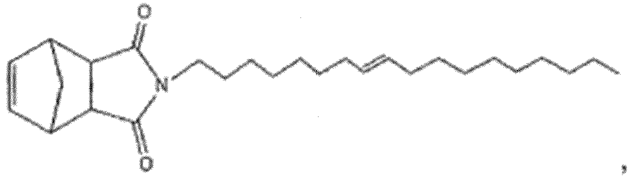 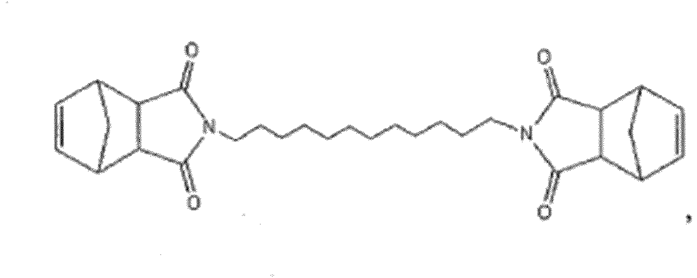 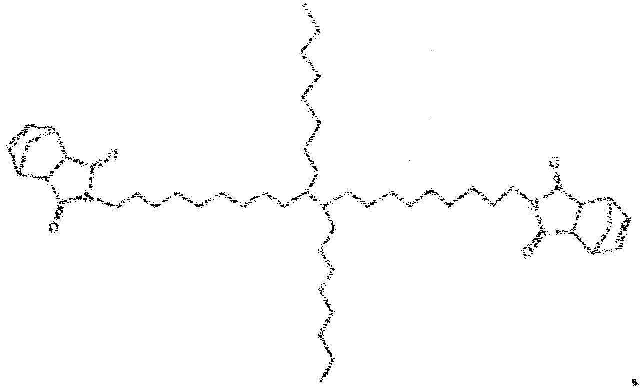 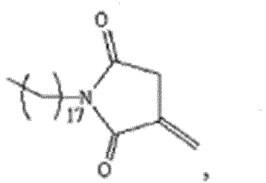 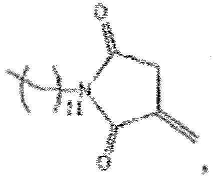 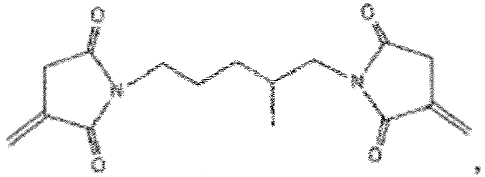 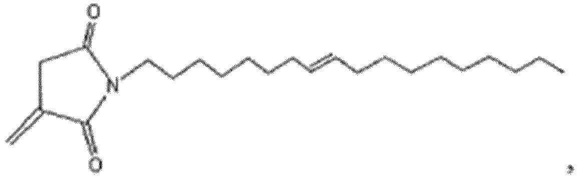 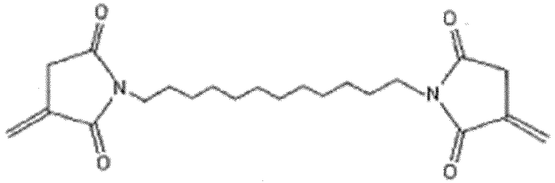 or

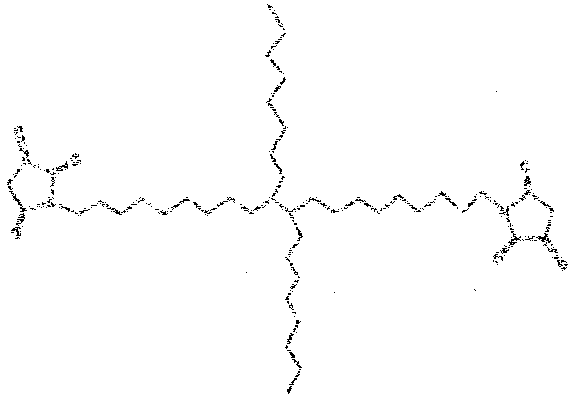

Particularly desirable maleiitiides and nadimides include, but are not limited to, 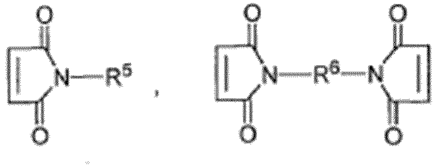 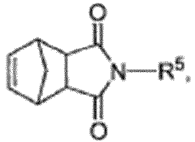 and 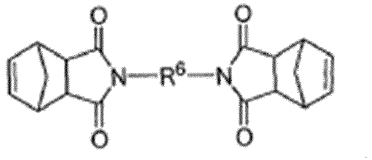 where R⁵ and R⁶ here are each selected from alkyl, aryl, aralkyl or alkaryl groups, having from about 6 to about 100 carbon atoms, with or without substitution or interruption by a member selected from silane, silicon, oxygen, halogen, carbonyl, hydroxyl, ester, carboxylic acid, urea, urethane, carbamate, sulfur, sulfonate and sulfone.

Other desirable maleimides include

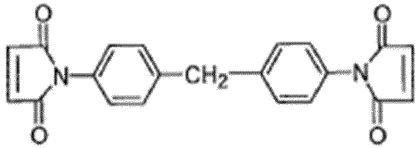

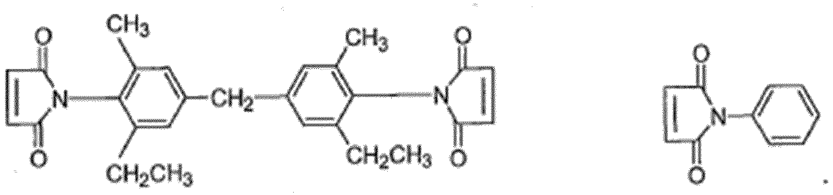

Maleimides should be present in the compositions within the range of from about 1 percent by weight to about 60 percent by weight, desirably from about 5 percent by weight to about 50 percent by weight, such as from about 10 percent by weight to about 40 percent by weight, based on the weight of the total composition.

The cyanate ester may include compounds having the general structure: 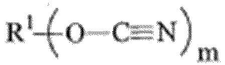 where m is from 2 to 5 and R¹ is an aromatic nucleus-containing residue and an (meth)acrylate monomer. The composition is free of added metallic catalyst.

R¹ here should contain at least 6 carbon atoms and may be derived, for example, from aromatic hydrocarbons, such as benzene, biphenyl, naphthalene, anthracene, pyrene or the like. The aromatic residue may be also be derived from a polynuclear aromatic hydrocarbon in which at least two aromatic rings are attached to each other through a bridging group.
In one embodiment, the bridging member has the formula 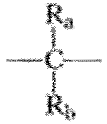 where Rₐ and R_{b} are the same or different and each represents a hydrogen atom or an alkyl group containing 1 to 4 carbon atoms.

R¹ also includes residues derived from novolac-type phenolic resins - i.e., cyanate esters of these phenolic resins. R¹ may also contain further ring attached, nonreactive substituents.

Examples of useful cyanate esters include, for instance 1,3-dicyanatobenzene; 1,4-dicyanatobenzene; 1,3,5-tricyanatobenzene; 1,3-, 1,4-, 1,6-, 1,8-, 2,6- or 2,7-dicyanatonaphthalene; 1,3,6-tricyanatonaphthalene; 4,4'-dicyanato-biphenyl; bis(4-cyanatophenyl)methane and 3,3',5,5'-tetramethyl, bis(4-cyanatophenyl)methane; 2,2-bis(3,5-dichloro-4-cyanatophenyl)propane; 2,2-bis(3,5-dibromo-4-dicyanatophenyl)propane; bis(4-cyanatophenyl)ether; bis(4-cyanatophenyl)sulfide; 2,2-bis(4-cyanatophenyl)propane; tris(4-cyanatophenyl)-phosphite; tris(4-cyanatophenyl)phosphate; bis(3-chloro-4-cyanatophenyl)methane; cyanated novolac; 1,3-bis[4-cyanatophenyl-1-(methylethylidene)]benzene and cyanated, bisphenol-terminated polycarbonate or other thermoplastic oligomer.

Other cyanate esters include those disclosed in U.S. Patent Nos. 4,477,629 and 4,528,366, U.K. Patent No. 1,305,702, and International Patent Publication No. WO 85/02184.

Particularly desirable cyanate esters for use herein are available commercially from Ciba Specialty Chemicals, Tarrytown, New York under the tradename "AROCY" [1,1-di(4-cyanatophenylethane)]. The structures of four desirable "AROCY" cyanate esters are

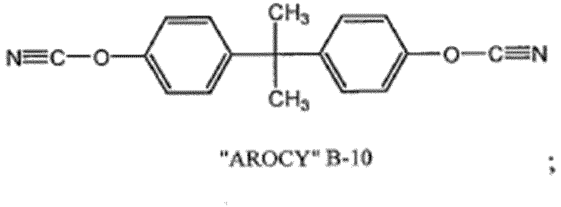

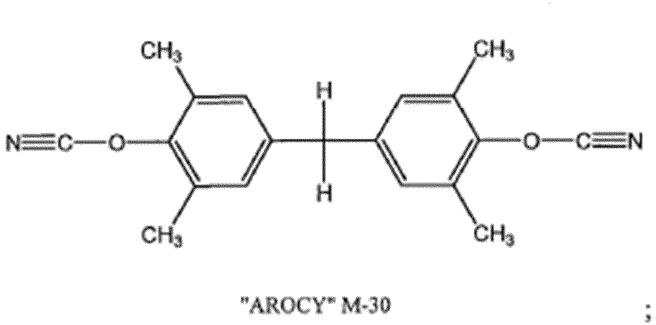

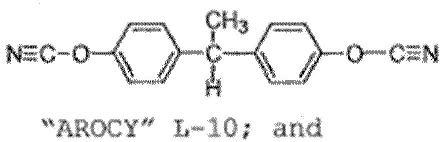

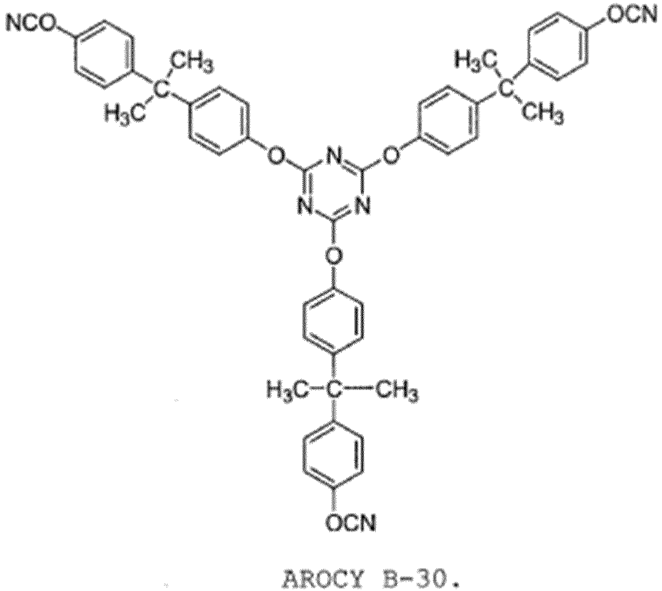

The coreactant should be used in an amount of about 10 to about 70 percent by weight, based on the total weight of the composition.

The composition may further include a silica component.

In some instances, the silica component should have a mean particle diameter on the nanoparticle size; that is, having a mean particle diameter on the order of 10⁻⁹ meters. The silica nanoparticles can be pre-dispersed in epoxy resins, and may be selected from those commercially available under the tradename NANOPOX, from Hanse Chemie, Germany. NANOPOX is a tradename for a product family of silica nanoparticle reinforced epoxy resins showing an outstanding combination of material properties. The silica phase consists of surface-modified, synthetic SiO₂ nanospheres with less than 50 nm diameter and an extremely narrow particle size distribution. The SiO₂ nanospheres are agglomerate-free dispersions in the epoxy resin matrix resulting in a low viscosity for resins containing up to 50 wt% silica.

Commercially available examples of the NANOPOX products include NANOPOX XP 0314 (a cycloaliphatic epoxy resin matrix), XP 0516 (a bisphenol A epoxy resin matrix), and XP 0525 (a bisphenol F epoxy resin matrix). These NANOPOX products are silica nanoparticle dispersions in the noted epoxy resins, at a level of up to about 50% by weight, though the manufacturer reports 40% by weight for the three noted products. These NANOPOX products are believed to have a particle size of about 5 nm to about 80 nm, though the manufacturer reports less than 50 nm.

The silica component should be present in an amount in the range of about 1 to about 60 percent by weight, such as about 3 to about 30 percent by weight, desirably about 5 to about 20 percent by weight, based on the total weight of the composition.

The composition may further include a toughening agent. Representative toughening agents include a core-shell rubber, a CTBN elastomer, or a block copolymer.

When used, the toughening agent should present in an amount between 2 to 25 percent by weight, based on the total weight of the composition.

The present invention makes use of a catalyst composition. The catalyst composition comprises a lithium salt, an anion of which has a conjugate acid with a pKa of less than 5; and a carboxylic acid, a sulfonic acid, or a combination thereof. The carboxylic acid or sulfonic acid should have a pKa of 6 or less, examples of which include adipic acid.

In some embodiments, the anion of the lithium salt may be a Group 15 element, such as P, Sb or As.

In some embodiments, the halogen of the hexahalogenated Group 15 element may be selected from F, Cl, Br or I.

More specifically, the lithium salt may be lithium hexafluoroantimonate.

Examples of this catalyst include lithium perchlorate, lithium tetrafluoroborate, lithium perchlorate, lithium carboxylates (such as lithium palmitate), lithium sulfonates (such as lithium trifluoromethanesulfonate), and combinations thereof.

A different catalyst composition can also be used. Here, the catalyst composition comprises a lithium salt, an anion of which has a conjugate acid with a pKa of less than 5; and a salt having as an anion a hexahalogenated Group 15 element, an example of which anion is hexafluorophosphate. The salt may have as a cation a tetraalkyl ammonium.

In some embodiments, the anion of the lithium salt may be a Group 15 element, such as P, Sb or As.

In some embodiments, the halogen of the hexahalogenated Group 15 element may be selected from F, Cl, Br or I.

More specifically, the lithium salt may be lithium hexafluoroantimonate.

The composition may also include one or more of epoxy, episulfide, oxetane, acrylate, methacrylate, maleimide, and cyanate ester as a coreactant, examples of which are as set forth above.

And like above, the coreactant should be used in an amount of about 10 to about 70 percent by weight, based on the total weight of the composition.

The inventive curable compositions, when exposed to appropriate cure conditions, demonstrates over 90 percent polymerization conversion, such as over 93 percent polymerization conversion, desirably over 95 percent polymerization conversion, and particularly desirably over 98 percent polymerization conversion.

The appropriate cure conditions ordinarily are a period of time of 120 minutes at a temperature of 170°C.

The examples below are provided for illustrative purposes.

### EXAMPLES

### Reference Example 1

10 g samples of benzoxazine (60:40 by weight combination of 3,3'-(methylenedi-4,1-phenylene) bis[3,4-dihydro-2H-1,3-benzoxazine] and 3,4-dihydro-3-phenyl-2H-1,3-benzoxazine) with 1×10⁻⁴ mol/g of catalyst were prepared by transferring the components into aluminum weighing dishes and mixing vigorously by hand on a hot plate at a temperature of about 80°C for a period of time of about 5 minutes. Small portions (~10 mg) of each sample were removed from each weighing dish for initial differential scale calorimeter ("DSC") measurements, and the samples were cured in a convection oven at a temperature of about 170°C for a period of time of about 120 minutes. DSC was performed on the cured samples and the percent conversion was calculated from the peak integrations by the following formula: percent conversion = ((I₀-I₁₂₀)/I₁₂₀) * 100, where I₀ is the integration (enthalpy) of the DSC cure peak of the uncured formulation and I₁₂₀ is the integration of the DSC cure peak after a period of time of 120 minutes at a temperature of 170°C. In all cases the ramp rate was 40°C/minute and the measurement were taken at 0.13°C intervals from 25-300°C.

In Table 1 below, the catalyst is identified together with the percent conversion.

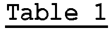

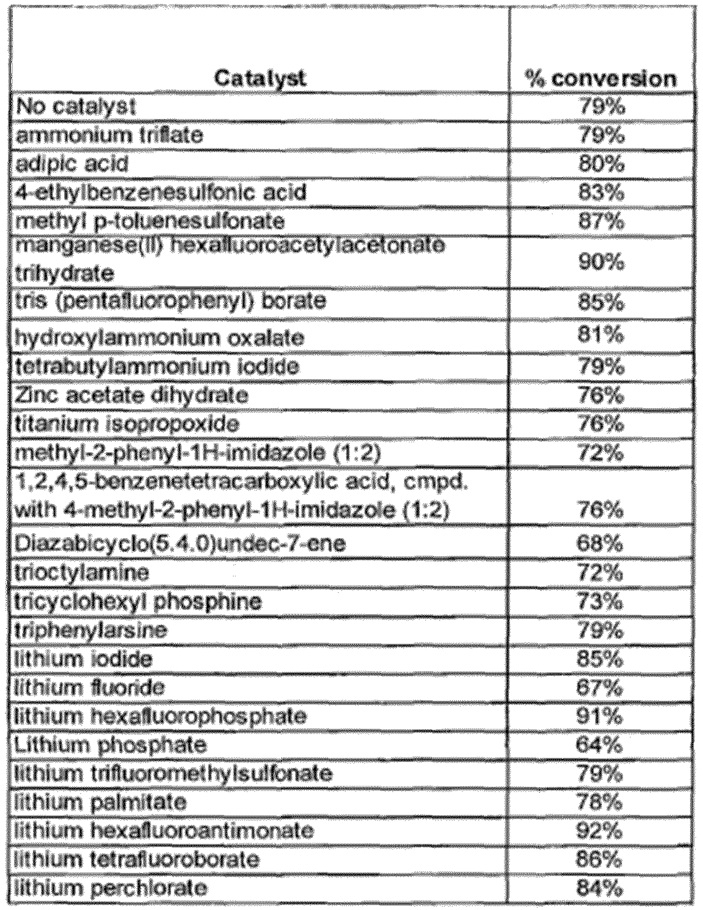

### Example 2

This example illustrates enhanced cure activity using various lithium salts and combinations with co-catalysts. The procedure of Example 1 was followed. All co-catalysts are present at 1×10⁻⁴ mol/g. The percent conversion results shown below in Table 2 confirm that higher percent conversions were observed when an acid or a hexafluorophosphate salt co-catalyst was used, even with an unreactive lithium salt. The first two entries in Table 2 (sodium and potassium hexafluorophosphate) provide negative controls showing that a percent conversion of 90 or greater was not obtained using these two salts with or without a co-catalyst. Examples that do not use a co-catalyst are provided for reference purposes.

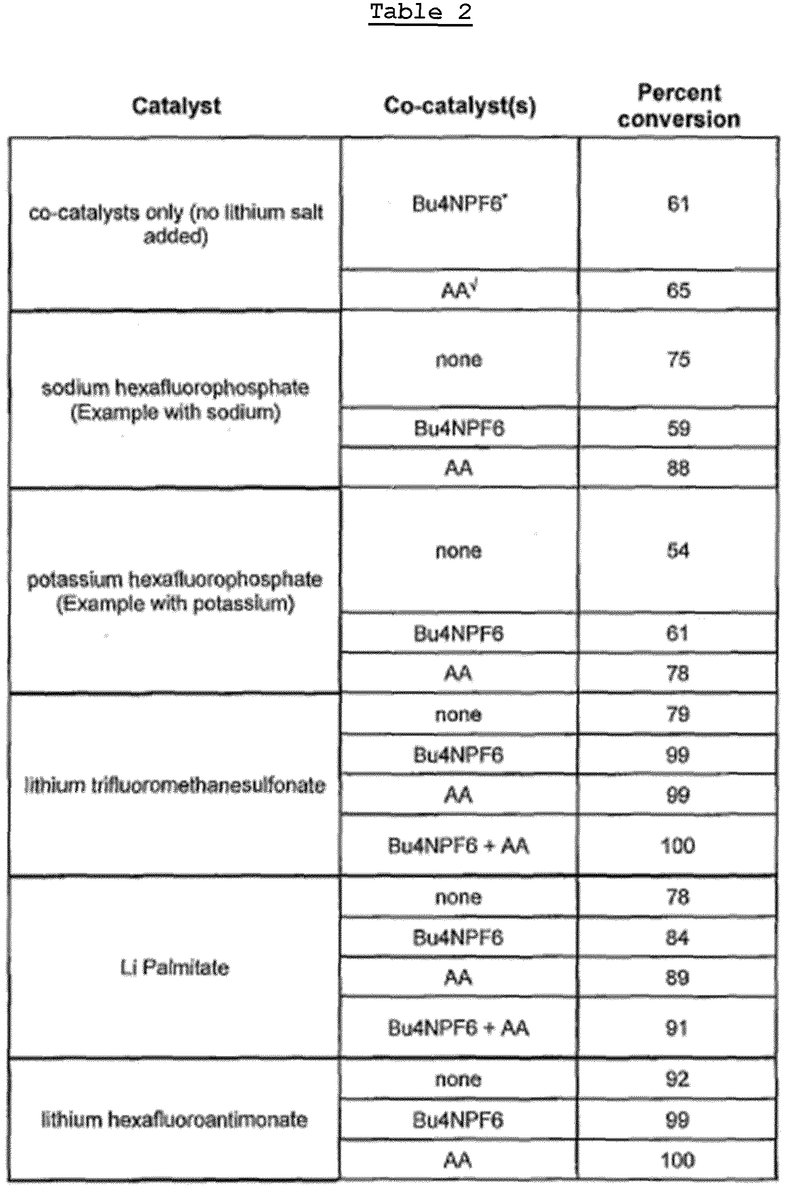

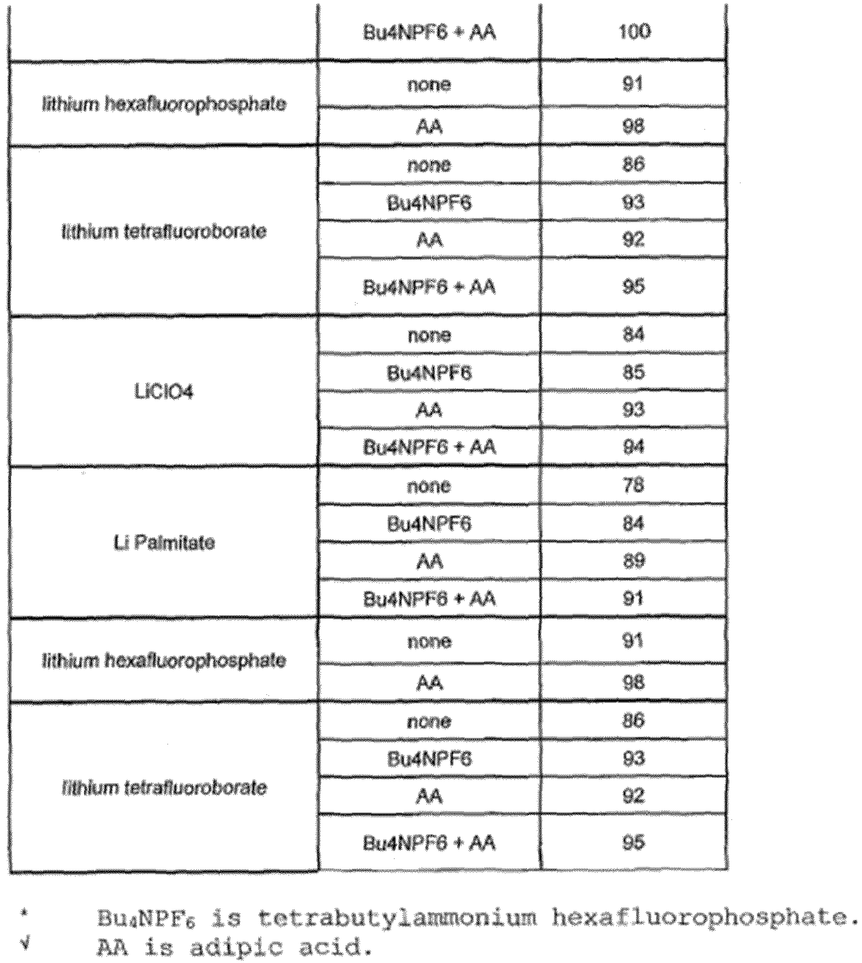

### Example 3

This example illustrated high percent conversions in quite short cure times using lithium catalysts, with and without co-catalysts. The procedure of Example 2 was followed here, except that cure times of 30 and 120 minutes were both used at 170°C. High percent conversion at a short cure time (i.e., 30 minutes) were measured for all of the lithium catalyst systems, as can be seen with reference to Table 3 below. Examples that do not use a co-catalyst are provided for reference purposes.

**Table 3**

| | **Percent conversion** | |
|---|---|---|
| **Catalyst** | **30 min** | **120 min** |
| No catalyst | 32 | 79 |
| Ammonium triflate | 53 | 79 |
| Manganese(II) hexafluoroacetylacetonate trihydrate | 70 | 91 |
| LiSbF₆ | 88 | 92 |
| LiSbF₆ + AA | 99 | 99 |
| LiSbF₆ + Nu4NPF₆ | 98 | 100 |
| LiSbF₆ + Nu4NPF₆ + AA | 99 | 100 |
| LiSbF₆ | 86 | 91 |
| LiPF₆/AA | 89 | 98 |

### Example 4

This example illustrates use of the lithium catalysts with and without co-catalysts with a single monofunctional benzoxazine. The procedure of Example 1 was followed here, except that only a single monofunctional benzoxazine (3,4-dihydro-3-phenyl-2H-1,3-benzoxazine) was used instead of the 60:40 benzoxazine combination recited there. Reference to Table 4 below shows that these lithium catalysts together with a co-catalyst in each case with a single monofunctional benzoxazine demonstrated a percent conversion of over 90. The lithium hexafluorantimonate catalyst, even without a co-catalyst, demonstrated over a 90 percent conversion with a single monofunctional benzoxazine. Examples that do not use a co-catalyst are provided for reference purposes.

**Table 4**

| **Catalyst** | **Co-Catalyst** | **Percent conversion** |
|---|---|---|
| None | None | 62 |
| Lithium trifluoromethanesutfonate | None | 77 |
| | AA | 95 |
| | Bu4NPF6 | 97 |
| Lithium hexafluoroantimonate | none | 93 |
| | AA | 97 |
| | Bu4NPF6 | 95 |

## Claims

1. A curable composition comprising:
(a) a benzoxazine component; and
(b) a catalyst composition;
wherein the catalyst composition comprises:
(i) a lithium salt, an anion of which has a conjugate acid with a pKa of less than 5; and
(ii) a carboxylic acid, a sulfonic acid, or a combination thereof;
or wherein the catalyst composition comprises:
(iii) a lithium salt, an anion of which has a conjugate acid with a pKa of less than 5; and
(iv) a salt having as an anion a hexahalogenated Group 15 element.

2. A curable composition comprising:
(a) a benzoxazine component; and
(b) a catalyst composition comprising:
(i) a cationic catalyst that is either comprised of a lithium cation and an anion comprising a hexahalogenated Group 15 element; or selected from lithium trifluoromethane sulfate, lithium palmitate, lithium tetrafluoroborate and lithium perchlorate; and
(ii) a co-catalyst selected from tetrabutyl ammonium hexafluorophosphate and adipic acid.

3. The composition of Claim 1, wherein the hexahalogenated Group 15 element is selected from P, Sb or As.

4. The composition of Claim 1, wherein the halogen of the hexahalogenated Group 15 element is selected from F, CI, Br or I.

5. The composition of Claim 1, wherein the composition demonstrates over 90 percent polymerization conversion, optionally over 93 percent, over 95 percent, or over 98 percent polymerization conversion.

6. The composition of Claim 2, wherein the benzoxazine component comprises one or more of: 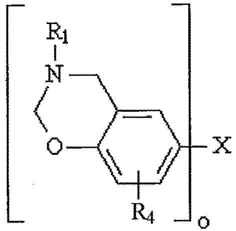 wherein o is 1-4, X is selected from the group consisting of a direct bond (when o is 2), alkyl (when o is 1), alkylene (when o is 2-4), carbonyl (when o is 2), thiol (when o is 1), thioether (when o is 2) , sulfoxide (when o is 2) , and sulfone (when o is 2), R₁ is selected from the group consisting of hydrogen, alkyl, and aryl, and R₄ is selected from hydrogen, halogen, alkyl, and alkenyl, or 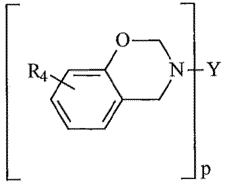 wherein p is 1-4, Y is selected from the group consisting of biphenyl (when p is 2), diphenyl methane (when p is 2) and derivatives thereof, diphenyl isopropane (when p is 2), diphenyl sulfide (when p is 2), diphenyl sulfoxide (when p is 2), diphenyl sulfone (when p is 2), and diphenyl ketone (when p is 2), and R₄ is selected from the group consisting of hydrogen, halogen, alkyl and alkenyl.

7. The composition of Claim 2, wherein the benzoxazine component comprises one or more of: 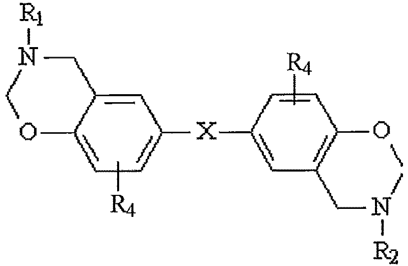 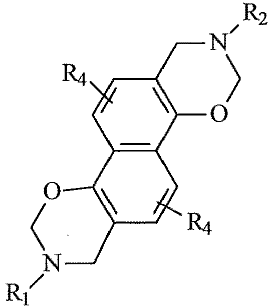 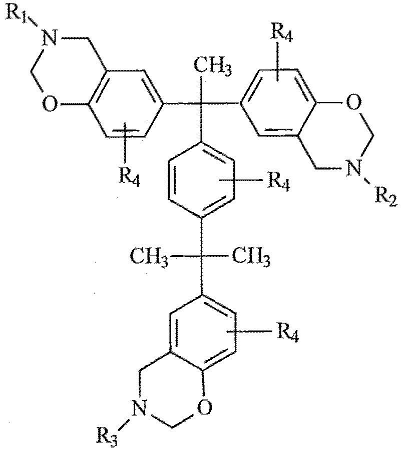 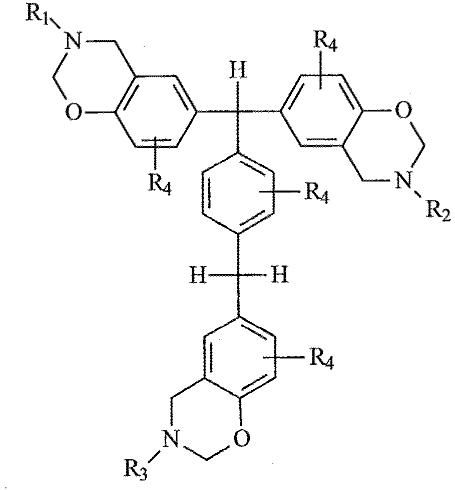 wherein X is selected from the group consisting of a direct bond, CH₂, C(CH₃)₂, C=O, S, S=O and O=S=O, and R₁, R₂, R₃ and R₄ are the same or different and are selected from the group consisting of hydrogen, alkyl, alkenyl and aryl.

8. The composition of Claim 2, wherein the benzoxazine component comprises one or more of:

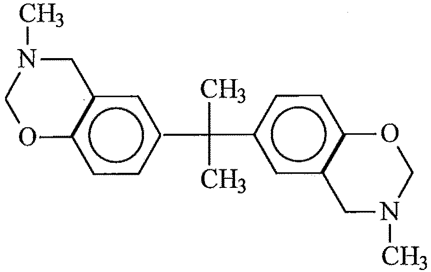

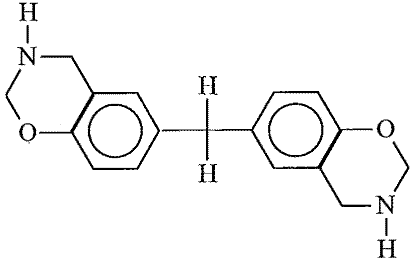

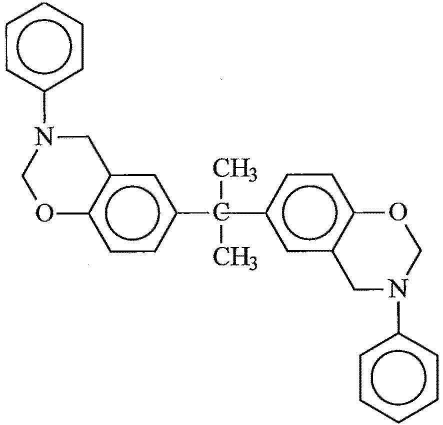

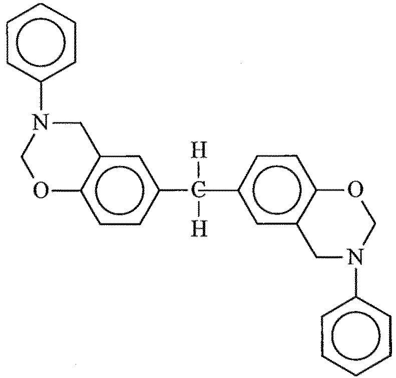

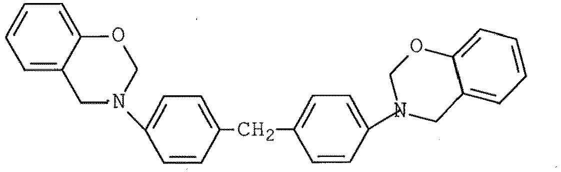

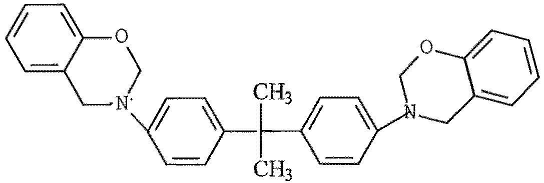

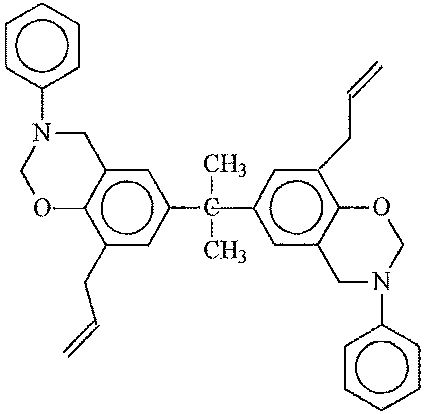

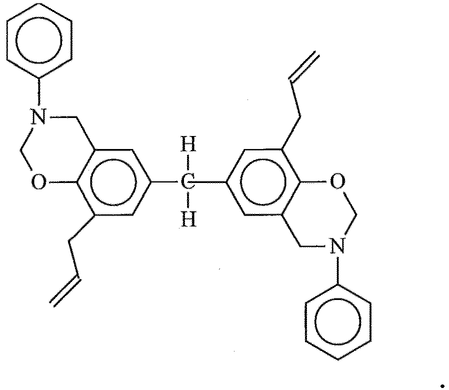

9. The composition of Claim 1, further comprising a member selected from the group consisting of epoxy, episulfide, oxetane, acrylate, methacrylate, maleimide, and cyanate ester.

10. The composition of Claim 9, wherein the epoxy is selected from the group consisting of glycidylated bisphenols (bisphenol A diglycidyl ether, bisphenol F diglycidyl ether, bisphenol S diglycidyl ether, bisphenol E diglycidyl ether), glycidylated biphenyls, cycloaliphatic epoxy resins, glycidylated anilines and glycidylated hydroxyanilines.

11. The composition of Claim 2, further comprising a silica component.

12. The composition of Claim 11, wherein the silica component is present in an amount between about 0.5 to about 80 percent by weight.

13. The composition of Claim 2, further comprising a toughening agent.

14. The composition of Claim 13, wherein the toughening agent is a core-shell rubber, a CTBN elastomer, or a block copolymer.

15. The composition of Claim 13, wherein the toughening agent is present in an amount between about 2 to about 25 percent by weight.

16. The composition of Claim 1, wherein the acid in (ii) has a pKa of 6 or less.

17. The composition of Claim 2, wherein the anion in (i) is a hexahalogenated Group 15 element selected from P, Sb or As.

18. The composition of Claim 2, wherein the acid in (ii) is adipic acid.

19. The composition of Claim 17, wherein the halogen of the hexahalogenated Group 15 element is selected from F, CI, Br or I.

20. The composition of Claim 1, wherein the lithium salt in (i) or (iii) is lithium hexafluoroantimonate.

21. The composition of Claim 1, wherein the salt in (iv) has as an anion hexafluorophosphate.

22. The composition of Claim 1, wherein the salt in (iv) has as a cation a tetraalkyl ammonium.

23. The composition of Claim 2, wherein the lithium salt in (i) is selected from lithium perchlorate, lithium tetrafluoroborate, and combinations thereof.

24. The composition of Claim 2, wherein the lithium salt in (i) is selected from lithium palmitate, lithium trifluoromethanesulfate and combinations thereof.

## Patentansprüche

1. Härtbare Zusammensetzung, umfassend:
(a) eine Benzoxazinkomponente und
(b) eine Katalsysatorzusammensetzung,
wobei die Katalysatorzusammensetzung umfasst:
(i) ein Lithiumsalz, dessen Anion eine konjugierte Säure mit einem pKa von weniger als 5 aufweist, und
(ii) eine Carbonsäure, eine Sulfonsäure oder eine Kombination davon,
oder wobei die Katalysatorzusammensetzung umfasst:
(iii) ein Lithiumsalz, dessen Anion eine konjugierte Säure mit einem pKa von weniger als 5 aufweist, und
(iv) ein Salz, das als ein Anion ein hexahalogeniertes Element der Gruppe 15 aufweist.

2. Härtbare Zusammensetzung, umfassend:
(a) eine Benzoxazinkomponente und
(b) eine Katalsysatorzusammensetzung, umfassend:
(i) einen kationischen Katalysator, der entweder ein Lithiumkation und ein Anion, umfassend ein hexahalogeniertes Element der Gruppe 15, umfasst oder aus Lithiumtrifluormethansulfat, Lithiumpalmitat, Lithiumtetrafluorborat und Lithiumperchlorat ausgewählt ist, und
(ii) einen Co-Katalysator, ausgewählt aus Tetrabutylammoniumhexafluorphosphat und Adipinsäure.

3. Zusammensetzung nach Anspruch 1, wobei das hexahalogenierte Element der Gruppe 15 aus P, Sb oder As ausgewählt ist.

4. Zusammensetzung nach Anspruch 1, wobei das Halogen des hexahalogenierten Elements der Gruppe 15 aus F, Cl, Br oder I ausgewählt ist.

5. Zusammensetzung nach Anspruch 1, wobei die Zusammensetzung einen Polymerisationsumsatz von über 90 Prozent, optional einen Polymerisationsumsatz von über 93 Prozent, über 95 Prozent oder über 98 Prozent, zeigt.

6. Zusammensetzung nach Anspruch 2, wobei die Benzoxazinkomponente eine oder mehrere der folgenden umfasst: 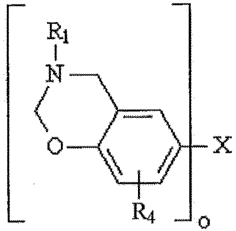 wobei o 1-4 ist, X aus der Gruppe, bestehend aus einer direkten Bindung (wenn o 2 ist), Alkyl (wenn o 1 ist), Alkylen (wenn o 2-4 ist), Carbonyl (wenn o 2 ist), Thiol (wenn o 1 ist), Thioether (wenn o 2 ist), Sulfoxid (wenn o 2 ist) und Sulfon (wenn o 2 ist), ausgewählt ist, R₁ aus der Gruppe, bestehend aus Wasserstoff, Alkyl und Aryl, ausgewählt ist und R₄ aus Wasserstoff, Halogen, Alkyl und Alkenyl ausgewählt ist, oder 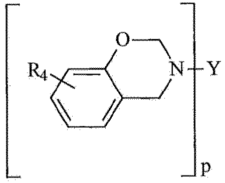 worin p 1-4 ist, Y aus der Gruppe, bestehend aus Biphenyl (wenn p 2 ist), Diphenylmethan (wenn p 2 ist) und Derivaten davon, Diphenylisopropan (wenn p 2 ist), Diphenylsulfid (wenn p 2 ist), Diphenylsulfoxid (wenn p 2 ist), Diphenylsulfon (wenn p 2 ist) und Diphenylketon (wenn p 2 ist), ausgewählt ist und R₄ aus der Gruppe, bestehend aus Wasserstoff, Halogen, Alkyl und Alkenyl, ausgewählt ist.

7. Zusammensetzung nach Anspruch 2, wobei die Benzoxazinkomponente eine oder mehrere der folgenden umfasst: 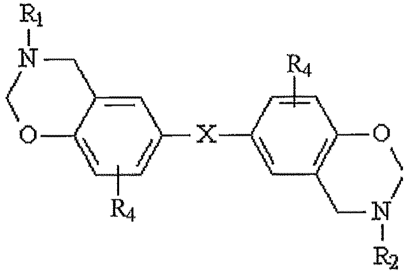 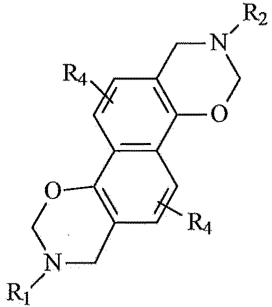 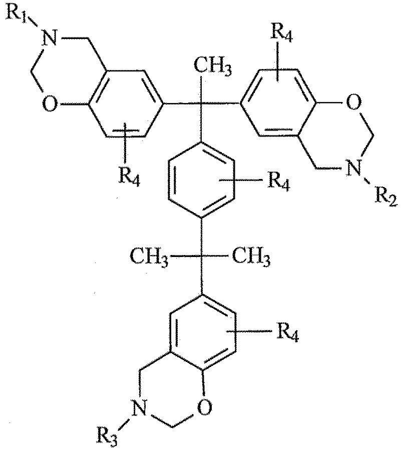 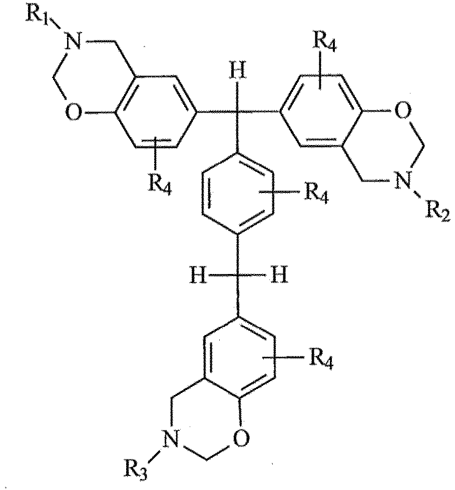 worin X aus der Gruppe, bestehend aus einer direkten Bindung, CH₂, C(CH₃)₂, C=O, S, S=O und O=S=O, ausgewählt ist und R₁, R₂, R₃ und R₄ gleich oder verschieden sind und aus der Gruppe, bestehend aus Wasserstoff, Alkyl, Alkenyl und Aryl, ausgewählt sind.

8. Zusammensetzung nach Anspruch 2, wobei die Benzoxazinkomponente eine oder mehrere der folgenden umfasst:

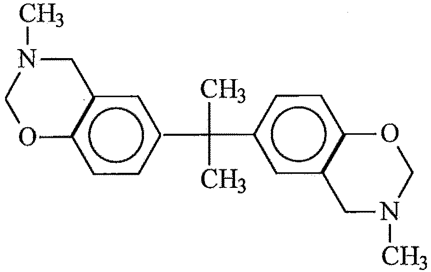

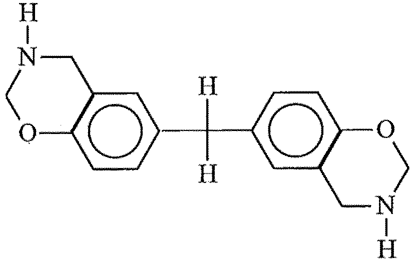

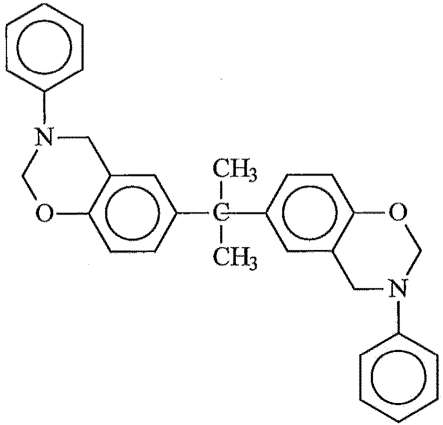

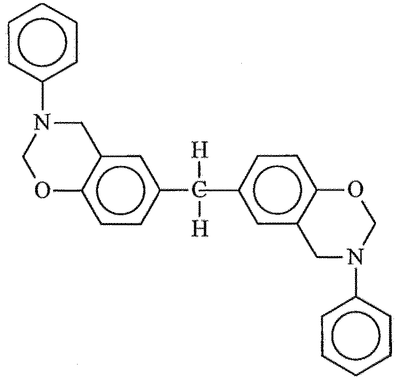

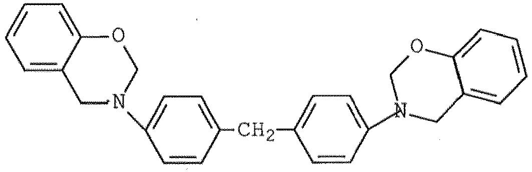

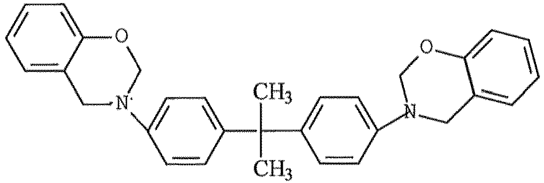

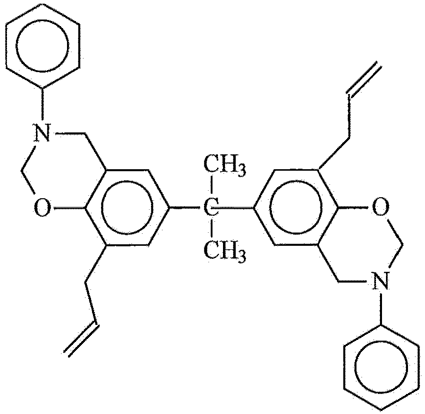

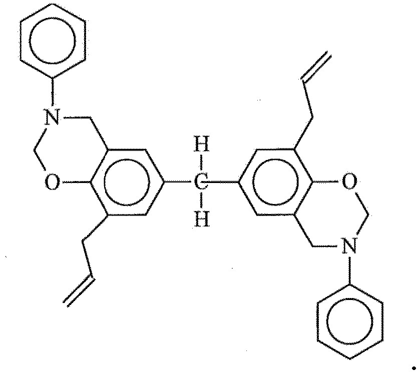

9. Zusammensetzung nach Anspruch 1, ferner umfassend ein Mitglied, ausgewählt aus der Gruppe, bestehend aus Epoxy, Episulfid, Oxetan, Acrylat, Methacrylat, Maleimid und Cyanatester.

10. Zusammensetzung nach Anspruch 9, wobei das Epoxy aus der Gruppe, bestehend aus glycidylierten Bisphenolen (Bisphenol A-Diglycidylether, Bisphenol F-Diglycidylether Bisphenol S-Diglycidylether Bisphenol E-Diglycidylether), glycidylierten Biphenylen, cycloaliphatischen Epoxyidharzen, glycidylierten Anilinen und glycidylierten Hydroxyanilinen, ausgewählt ist.

11. Zusammensetzung nach Anspruch 2, ferner umfassend eine Silicakomponente.

12. Zusammensetzung nach Anspruch 11, wobei die Silicakomponente in einer Menge zwischen etwa 0,5 und etwa 80 Gewichtsprozent vorhanden ist.

13. Zusammensetzung nach Anspruch 2, ferner umfassend einen Schlagzähigkeitsverbesserer.

14. Zusammensetzung nach Anspruch 13, wobei der Schlagzähigkeitsverbesserer ein Kern-Schale-Kautschuk, ein CTBN-Elastomer oder ein Blockcopolymer ist.

15. Zusammensetzung nach Anspruch 13, wobei der Schlagzähigkeitsverbesserer in einer Menge zwischen etwa 2 und etwa 25 Gewichtsprozent vorhanden ist.

16. Zusammensetzung nach Anspruch 1, wobei die Säure in (ii) einen pKa von 6 oder weniger aufweist.

17. Zusammensetzung nach Anspruch 2, wobei das Anion in (i) ein hexahalogeniertes Element der Gruppe 15, ausgewählt aus P, Sb oder As, ist.

18. Zusammensetzung nach Anspruch 2, wobei die Säure in (ii) Adipinsäure ist.

19. Zusammensetzung nach Anspruch 17, wobei das Halogen des hexahalogenierten Elements der Gruppe 15 aus F, Cl, Br oder I ausgewählt ist.

20. Zusammensetzung nach Anspruch 1, wobei das Lithiumsalz in (i) oder (iii) Lithiumhexafluorantimonat ist.

21. Zusammensetzung nach Anspruch 1, wobei das Salz in (iv) als ein Anion Hexafluorphosphat aufweist.

22. Zusammensetzung nach Anspruch 1, wobei das Salz in (iv) als ein Kation ein Tetraalkylammonium aufweist.

23. Zusammensetzung nach Anspruch 2, wobei das Lithiumsalz in (i) aus Lithiumperchlorat, Lithiumtetrafluorborat und Kombinationen davon ausgewählt ist.

24. Zusammensetzung nach Anspruch 2, wobei das Lithiumsalz in (i) aus Lithiumpalmitat, Lithiumtrifluormethansulfat und Kombinationen davon ausgewählt ist.

## Revendications

1. Composition durcissable comprenant :
(a) un composant benzoxazine ; et
(b) une composition de catalyseur ;
dans laquelle la composition de catalyseur comprend :
(i) un sel de lithium, dont un anion présente un acide conjugué avec un pKa de moins de 5 ; et
(ii) un acide carboxylique, un acide sulfonique, ou une de leurs combinaisons ;
ou dans laquelle la composition de catalyseur comprend :
(iii) un sel de lithium, dont un anion présente un acide conjugué avec un pKa de moins de 5 ; et
(iv) un sel présentant comme anion un élément hexahalogéné du groupe 15.

2. Composition durcissable comprenant :
(a) un composant benzoxazine ; et
(b) une composition de catalyseur comprenant :
(i) un catalyseur cationique qui soit comprend un cation lithium et un anion comprenant un élément hexahalogéné du groupe 15 ; soit est choisi parmi trifluorométhanesulfate de lithium, palmitate de lithium, tétrafluoroborate de lithium et perchlorate de lithium ; et
(ii) un cocatalyseur choisi parmi hexafluorophosphate de tétrabutylammonium et acide adipique.

3. Composition selon la revendication 1, dans laquelle l'élément hexahalogéné du groupe 15 est choisi parmi P, Sb ou As.

4. Composition selon la revendication 1, dans laquelle l'élément hexahalogéné du groupe 15 est choisi parmi F, CI, Br ou I.

5. Composition selon la revendication 1, dans laquelle la composition démontre une conversion de polymérisation supérieure à 90 pour cent, facultativement une conversion de polymérisation supérieure à 93 pour cent, supérieure à 95 pour cent ou supérieure à 98 pour cent.

6. Composition selon la revendication 2, dans laquelle le composant benzoxazine comprend un ou plusieurs parmi : 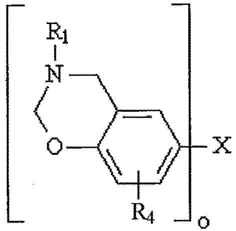
dans laquelle o vaut 1 à 4, X est choisi parmi le groupe consistant en une liaison directe (lorsque o vaut 2), alkyle (lorsque o vaut 1), alkylène (lorsque o vaut 2 à 4), carbonyle (lorsque o vaut 2), thiol (lorsque o vaut 1), thioéther (lorsque o vaut 2), sulfoxyde (lorsque o vaut 2), et
sulfone (lorsque o vaut 2), R₁ est choisi parmi le groupe consistant en hydrogène, alkyle et aryle, et R₄ est choisi parmi hydrogène, halogène, alkyle et alcényle, ou 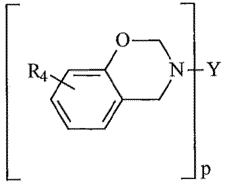
dans laquelle p vaut 1 à 4, Y est choisi parmi le groupe consistant en biphényle (lorsque p vaut 2), diphénylméthane (lorsque p vaut 2) et ses dérivés, diphénylisopropane (lorsque p vaut 2), sulfure de diphényle (lorsque p vaut 2), diphényl sulfoxyde (lorsque p vaut 2), diphénylsulfone (lorsque p vaut 2) et diphénylcétone (lorsque p vaut 2), et R₄ est choisi parmi le groupe consistant en hydrogène, halogène, alkyle et alcényle.

7. Composition selon la revendication 2, dans laquelle le composé benzoxazine comprend un ou plusieurs parmi : 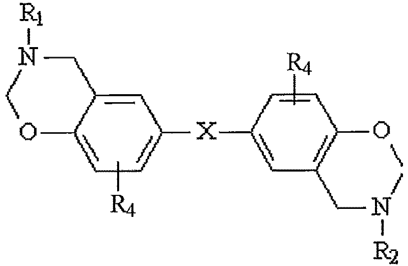 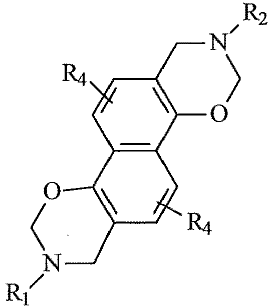 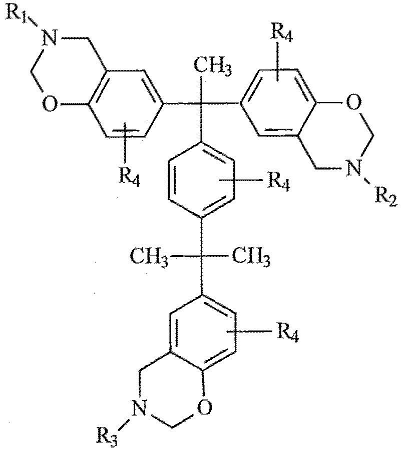 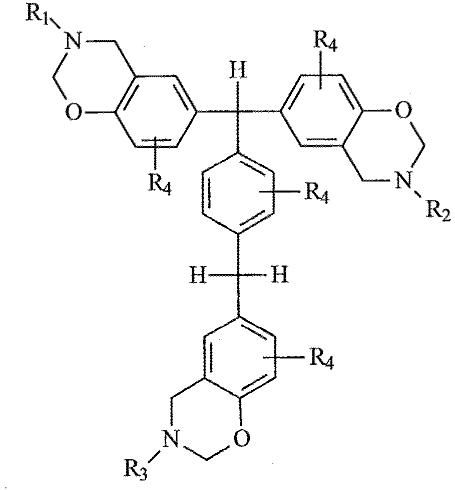 dans laquelle X est choisi parmi le groupe consistant en une liaison directe, CH₂, C(CH₃)₂, C=O, S, S=O et O=S=O, et R₁, R₂, R₃ et R₄ sont identiques ou différents et sont choisis dans le groupe consistant en hydrogène, alkyle, alcényle et aryle.

8. Composition selon la revendication 2, dans laquelle le composé benzoxazine comprend un ou plusieurs parmi :

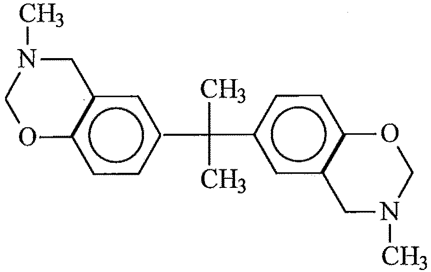

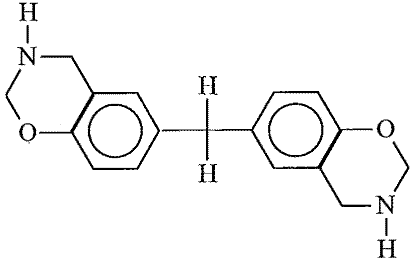

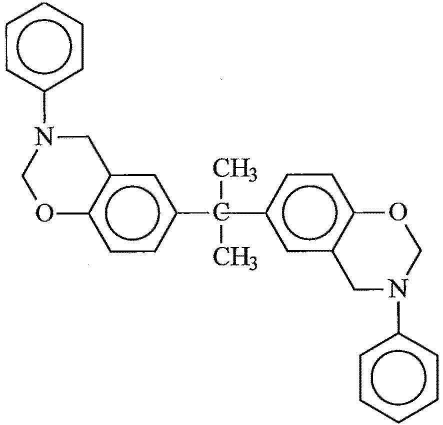

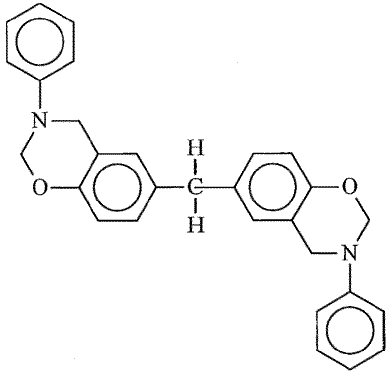

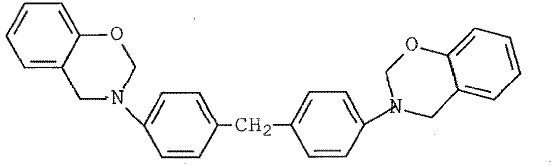

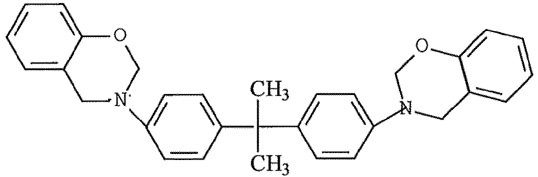

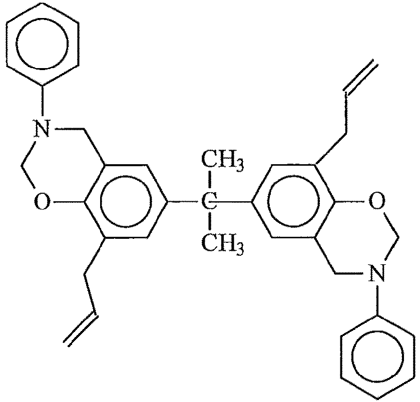

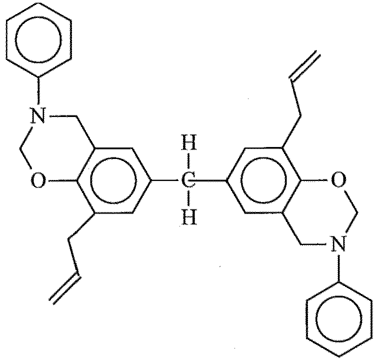

9. Composition selon la revendication 1, comprenant en outre un élément choisi parmi le groupe consistant en époxy, épisulfure, oxétane, acrylate, méthacrylate, maléimide et ester de cyanate.

10. Composition selon la revendication 9, dans laquelle l'époxy est choisi parmi le groupe consistant en bisphénols glycidylés (diglycidyl éther de bisphénol A, diglycidyl éther de bisphénol F, diglycidyl éther de bisphénol S, diglycidyl éther de bisphénol E), biphényles glycidylés, résines époxy cycloaliphatiques, anilines glycidylées et hydroxyanilines glycidylées.

11. Composition selon la revendication 2, comprenant en outre un composant de silice.

12. Composition selon la revendication 11, dans laquelle le composant de silice est présent en une quantité entre environ 0,5 et environ 80 pour cent en poids.

13. Composition selon la revendication 2, comprenant en outre un agent de ténacité.

14. Composition selon la revendication 13, dans laquelle l'agent de ténacité est un caoutchouc à coeur-écorce, un élastomère CTBN ou un copolymère séquencé.

15. Composition selon la revendication 13, dans laquelle l'agent de ténacité est présent en une quantité entre environ 2 et environ 25 pour cent en poids.

16. Composition selon la revendication 1, dans laquelle l'acide en (ii) présente un pKa de 6 ou moins.

17. Composition selon la revendication 2, dans laquelle l'anion en (i) est un élément hexahalogéné du groupe 15 choisi parmi P, Sb ou As.

18. Composition selon la revendication 2, dans laquelle l'acide en (ii) est l'acide adipique.

19. Composition selon la revendication 17, dans laquelle l'halogène de l'élément hexahalogéné du groupe 15 est choisi parmi F, CI, Br ou I.

20. Composition selon la revendication 1, dans laquelle le sel de lithium en (i) ou (iii) est l'hexafluoroantimonate de lithium.

21. Composition selon la revendication 1, dans laquelle le sel en (iv) présente comme anion l'hexafluorophosphate.

22. Composition selon la revendication 1, dans laquelle le sel en (iv) présente comme cation un tétraalkylammonium.

23. Composition selon la revendication 2, dans laquelle le sel de lithium en (i) est choisi parmi perchlorate de lithium, tétrafluoroborate de lithium, et leurs combinaisons.

24. Composition selon la revendication 2, dans laquelle le sel de lithium en (i) est choisi parmi palmitate de lithium, trifluorométhanesulfate de lithium et leurs combinaisons.
